**Europäisches Patentamt**

**European Patent Office**

**Office européen des brevets**

(19)

(11) Numéro de publication: **0 072 331**
**B1**

(12)

# FASCICULE DE BREVET EUROPEEN

(45) Date de publication du fascicule du brevet:
27.02.85

(51) Int. Cl.⁴: **B 60 T 8/18**

(21) Numéro de dépôt: **82401505.1**

(22) Date de dépôt: **09.08.82**

(54) **Correcteur de freinage.**

(30) Priorité: **11.08.81 FR 8115529**

(43) Date de publication de la demande:
**16.02.83 Bulletin 83/7**

(45) Mention de la délivrance du brevet:
**27.02.85 Bulletin 85/9**

(84) Etats contractants désignés:
**DE GB IT**

(56) Documents cités:
**FR - E - 55 844**

(73) Titulaire: **SOCIETE ANONYME D.B.A., Centre Paris Pleyel, F-93521 St-Denis Cédex 01 (FR)**

(72) Inventeur: **Muterel, Roland, 5 Résidence les Beaux Lieux, F-95550 Bessancourt (FR)**

(74) Mandataire: **Le Moenner, Gabriel et al, SERVICE BREVETS BENDIX 44, Rue François 1er, F-75008 Paris (FR)**

ACTORUM AG

## Description

L'invention se rapporte aux correcteurs de freinage à rapport variable pour véhicules automobiles. On connaît, de la première addition N° 55844 au brevet français N° 977052, un correcteur de freinage comprenant un boîtier pourvu de deux alésages parallèles, deux pistons montés coulissants dans lesdits alésages, l'un des pistons délimitant dans le boîtier une chambre d'entrée à relier à une source de fluide sous pression et l'autre piston coopérant avec une valve commandant l'écoulement de fluide entre ladite chambre d'entrée et une chambre de sortie à relier à au moins un moteur de frein, les deux pistons se projetant hors du boîtier et coopérant avec les deux extrémités d'un balancier monté articulé sur ledit boîtier, l'axe d'articulation étant mobile en fonction de la charge du véhicule.

Grâce à une telle disposition, le rapport entre l'accroissement de la pression de sortie, c'est-à-dire la pression de freinage, et l'accroissement de la pression d'entrée est rendu variable en fonction de la charge du véhicule, afin de tirer parti du fait que l'adhérence du véhicule est d'autant meilleure qu'il est plus chargé.

Dans l'exemple cité, l'axe d'articulation du balancier est perpendiculaire au plan défini par les deux pistons et se déplace parallèlement à lui-même sous l'action d'un dispositif d'entraînement à biellettes commandé par un levier primaire auquel sont imprimés des mouvements représentatifs des débattements de la suspension du véhicule.

Ce type de montage présente l'inconvénient de nécessiter un grand nombre de composants, ce qui, outre l'augmentation des coûts de fabrication et de montage, entraîne l'apparition de jeux importants entre le levier primaire et l'axe d'articulation et, par conséquent, un manque de fiabilité du correcteur.

Pour pallier ces inconvénients, l'invention propose un correcteur de freinage du type spécifié ci-avant, caractérisé en ce que ledit axe d'articulation est monté perpendiculairement sur un pivot qui s'étend parallèlement auxdits pistons, ledit pivot étant entraîné en rotation, avec débattement angulaire limité, en fonction de la charge du véhicule.

La structure détaillée et les avantages de l'invention apparaîtront plus clairement à la lecture de la description qui va suivre et se réfère aux dessins annexés dans lesquels:

la fig. 1 est une vue en coupe d'un correcteur de freinage selon l'invention;

la fig. 2 est une vue en coupe, prise suivant la ligne II-II, du correcteur de la fig. 1, et

la fig. 3 est une vue en coupe, prise suivant la ligne III-III, du correcteur de la fig. 1.

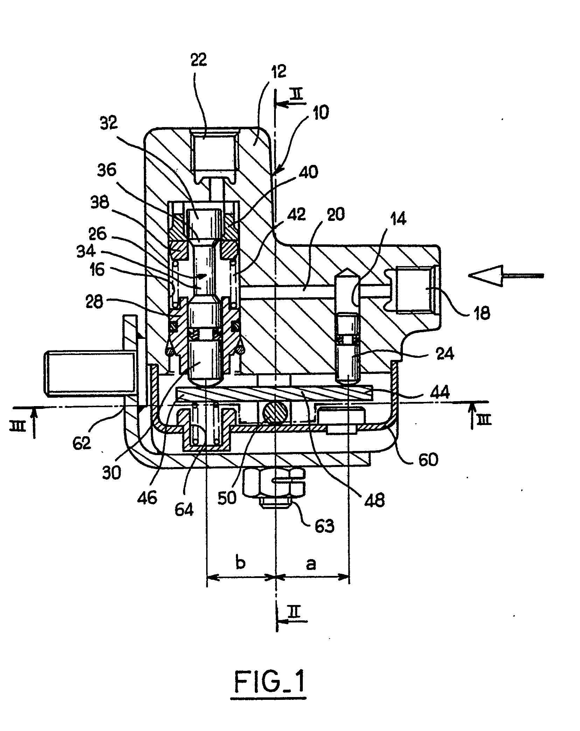

Le correcteur de freinage 10 représenté à la fig. 1 comprend un boîtier 12 percé de deux alésages borgnes parallèles 14 et 16. Un orifice d'entrée communique à la fois avec l'alésage 14 et l'alésage 16 par l'intermédiaire d'un conduit 20.

Un orifice de sortie 22 communique avec le fond de l'alésage 16.

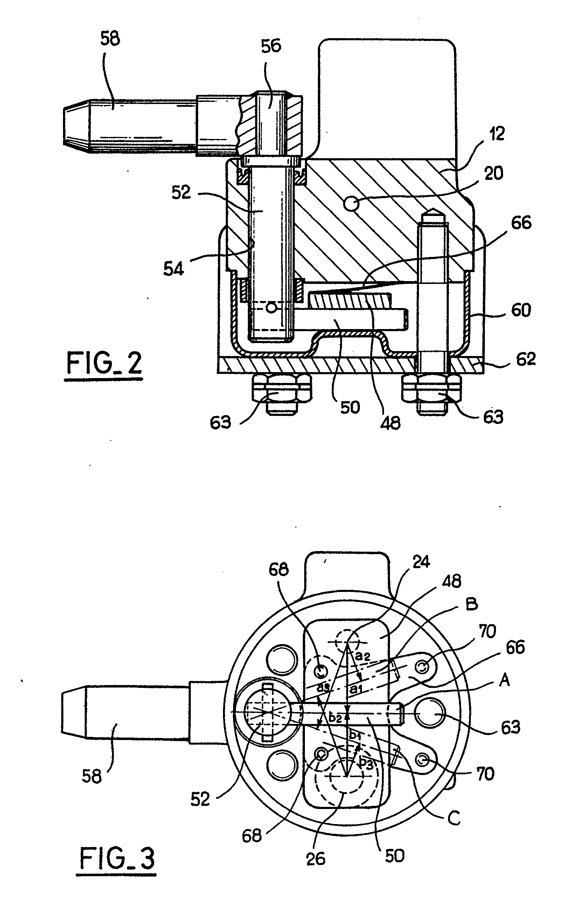

Dans l'alésage 14 est monté coulissant de manière étanche un piston 24. Dans l'alésage 16 est monté un piston de correcteur 26 de la manière suivante: un fourreau 28 est monté fixe et de manière étanche au voisinage de l'extrémité ouverte de l'alésage 16. Le piston 26 comporte une première extrémité 30 montée coulissante de manière étanche dans le passage central du fourreau 28 et une deuxième extrémité 32 située au fond de l'alésage 16, les deux extrémités du piston étant reliées par une partie de diamètre réduit 34, séparée de la partie 32 par un épaulement 36. Autour de la partie centrale 34 du piston est monté un joint-valve 38 en contact étanche, à sa périphérie, avec la paroi interne de l'alésage 16, et maintenu en contact avec une couronne de butée 40 par un ressort 42 emprisonné entre le fourreau 28 et le joint-valve 38. Les deux extrémités des pistons 24 et 26 qui font saillie hors du boîtier 12 coopèrent respectivement avec les deux bras 44 et 46 d'un balancier 48. Ce dernier consiste en une plaque rigide dont une face prend appui sur les pistons 24 et 26 et dont l'autre face prend appui sur un axe d'articulation 50 susceptible de se déplacer par rapport au balancier 48, comme il sera vu ci-après en se référant à la fig. 2 qui est une coupe de la fig. 1 prise suivant la ligne II-II.

Comme représenté, l'axe d'articulation 50 est fixé sensiblement perpendiculairement sur un pivot 52 qui traverse un alésage 54 du boîtier 12, cet alésage étant parallèle aux deux alésage 14 et 16. A l'extrémité 56 du pivot 52 opposé à l'axe d'articulation 50 est fixé un bras de levier 58 qui est relié de manière traditionnelle (non représentée) aux éléments de la suspension du véhicule, de manière à provoquer une rotation d'amplitude donnée du pivot 52 en fonction de la charge supportée par le véhicule.

A la fig. 3, qui est une vue du correcteur prise suivant la ligne III-III, sont représentées les différentes positions que peut prendre l'axe d'articulation 50 par rapport au balancier 48 lors des débattements du levier 58. La position représentée en trait plein, et à laquelle a été attribuée la référence A, correspond sensiblement à une charge moyenne du véhicule; la position représentée en traits mixtes, et à laquelle a été attribuée la référence B, correspond à la charge minimale du véhicule; la position représentée en traits mixtes, et à laquelle a été attribuée la référence C, correspond à la charge maximale du véhicule.

Dans ces trois positions, les points de contact des pistons 24 et 26 sur le balancier 48 sont éloignés de l'axe d'articulation 50 des distances appelées $a_1$, $a_2$, $a_3$ et $b_1$, $b_2$, $b_3$.

On notera que l'axe d'articulation 50 prend appui sur une plaque de soutien 60, elle-même fixée au boîtier 12 par l'intermédiaire d'une plaque de montage 62 et de vis 63; un ressort 64 prend appui sur la plaque de soutien 60 pour repousser le balancier 48 constamment en appui contre l'extrémité 30 du piston 26.

Selon les efforts qui lui sont appliqués par les pistons 24 et 26, le balancier 48 oscille autour de l'axe d'articulation 50; pour maintenir le balancier dans une orientation sensiblement constante par rapport au boîtier 12, il est prévu un ressort de maintien 66 ayant la forme d'une plaque métallique de faible épaisseur, fixée en deux points 68 au balancier 48 et en deux autres points 70 au boîtier 12, les deux paires de points 68, 70 étant disposées de part et d'autre du plan commun des deux pistons 24 et 26, et la plaque métallique 66 faisant avec ce plan un angle aussi proche que possible de la perpendiculaire. On notera que ce ressort a été omis sur la fig. 1.

Pour les besoins de la description du fonctionnement de cet appareil, on appellera S1 la surface du piston 24, S2 la section de la partie 30 du piston 26, S3 la section interne du joint-valve 38 et R la force du ressort 64.

Le correcteur ainsi décrit fonctionne de la manière suivante (cf. fig. 1): en l'absence de pression à l'orifice d'entrée 18, le ressort 64 repousse le balancier et le piston 26 jusqu'à ce que ce dernier vienne en butée au fond de l'alésage 16, position dans laquelle l'épaulement 36 du piston est dégagé du joint-valve 38 et le conduit 20 est en liaison directe avec l'orifice de sortie 22.

Lorsqu'on admet du fluide sous pression à l'orifice d'entrée 18, on distingue deux phases de fonctionnement.

Durant la première phase, tant que la pression à l'orifice d'entrée, appelée Pe, reste faible, le piston 26 reste en butée au fond de l'alésage 16 puisque la force résultante $R + Pe\,S1\,\dfrac{a}{b}$ (dans laquelle le terme $Pe\,S1\,\dfrac{a}{b}$ représente la force transmise *via* le balancier 48 par le piston pilote 24) agissant sur le piston 26 vers l'intérieur de l'alésage 16 est supérieure à la force Pe S2 agissant en sens inverse, et la pression à l'orifice de sortie, appelée Ps, reste égale à la pression d'entrée Pe.

A partir d'une certaine valeur de la pression Pe, dite pression de coupure Pc, la force Pe S2 devient supérieure à $R + Pe\,S1\,\dfrac{a}{b}$ et le piston 26 se déplace vers l'extérieur de l'alésage 16, ce qui amène l'épaulement 36 au contact du joint-valve 38.

Dès lors débute la seconde phase du fonctionnement durant laquelle le piston 26, par décollement et rapprochements successifs de l'épaulement 36 et du joint-valve 38, entraîne une modulation de la pression de sortie Ps.

Plus précisément, l'équilibre des forces qui agissent sur le piston 26 s'écrit:

$$Ps\,S3 + Pe\,S2 = Pe\,S3 + R + Pe\,S1\,\frac{a}{b}$$

d'où la relation entre Ps et Pe durant cette seconde phase:

$$Ps = Pe\left(1 - \frac{S2}{S3} + \frac{S1}{S3}\frac{a}{b}\right) + \frac{R}{S3}$$

ou encore, si l'on considère la relation entre les accroissements ΔPe et ΔPs des pressions d'entrée et de sortie:

$$\Delta Ps = \Delta Pe\left(\alpha + \beta\,\frac{a}{b}\right)$$

où α et β représentent des constantes.

Il y a donc une relation linéaire entre ces accroissements dont la pente est fonction du rapport $\dfrac{a}{b}$, c'est-à-dire de la charge du véhicule.

Considérant maintenant la fig. 3 sur laquelle sont représentées diverses positions de l'axe d'articulation 50 en fonction de la charge du véhicule, on note que la variation du rapport $\dfrac{a}{b}$ en fonction de la charge est obtenue grâce à un dispositif particulièrement simple par comparaison aux appareils de l'art antérieur.

On rappellera enfin la forme particulière du ressort de maintien 66, lequel doit en effet maintenir le balancier 48 dans une orientation sensiblement constante par rapport au boîtier 12, tout en permettant des oscillations limitées du balancier autour de l'axe d'articulation 50, quelle que soit la position de ce dernier en fonction de la charge du véhicule. En d'autres termes, le ressort de maintien a une faible raideur dans la direction des pistons 24 et 26, mais une forte raideur dans les directions perpendiculaires.

**Revendications**

1. Correcteur de freinage comprenant un boîtier (12) pourvu de deux alésages parallèles (14, 16), deux pistons (24, 26) montés coulissants dans lesdits alésages, l'un des pistons (24) délimitant dans le boîtier une chambre d'entrée (18, 20) à relier à une source de fluide sous pression et l'autre piston (26) coopérant avec une valve (36, 38) commandant l'écoulement de fluide entre ladite chambre d'entrée (20) et une chambre de sortie (22) à relier à au moins un moteur de frein, les deux pistons (24, 26) se projetant hors du boîtier (12) et coopérant avec les deux extrémités d'un balancier (48) monté articulé sur ledit boîtier (12), l'axe d'articulation (50) étant mobile en fonction de la charge du véhicule, caractérisé en ce que ledit axe d'articulation (50) est monté perpendiculairement sur un pivot (52) qui s'étend parallèlement auxdits pistons (24, 26), ledit pivot (52) étant entraîné en rotation, avec débattement angulaire limité, en fonction de la charge du véhicule.

2. Correcteur de freinage selon la revendication 1, caractérisé en ce que ledit balancier (48) consiste en une plaque rigide dont une face prend appui sur lesdits pistons (24, 26) et dont l'autre face prend appui sur ledit axe d'articulation (50).

3. Correcteur de freinage selon la revendication 2, caractérisé en ce que ledit balancier (48) est relié audit boîtier (12) par un ressort de maintien (66) de faible raideur dans la direction commune desdits pistons (24, 26) et de forte raideur dans les directions perpendiculaires.

4. Correcteur de freinage selon l'une des revendications 2 ou 3, caractérisé en ce qu'il comprend une plaque de soutien (60) sur laquelle ledit axe d'articulation (50) prend appui à l'opposé dudit balancier (48).

## Claims

1. A brake force regulator comprising a casing (12) provided with a pair of parallel bores (14, 16), a pair of pistons (24, 26) slidingly mounted in said bores, one of the pistons (24) limiting in the casing an inlet chamber (18, 20) to be connected to a fluid pressure source and the other of said pistons (26) cooperating with a valve (36, 38) controlling fluid flow between the inlet chamber (20) and an outlet chamber (22) to be connected to at least one brake motor, the two pistons (24, 26) projecting out of the casing (12) and cooperating with the two ends of a balance member (48) pivotally mounted on said casing (12), the pivot axis ·(50) being movable in response to vehicle load, characterized in that said pivot axis (50) is perpendicularly mounted upon a pivot (52) extending parallel to said pistons (24, 26), said pivot (52) being rotatable in response to vehicle load within a limited angular range.

2. A brake force regulator according to Claim 1, characterized in that said balance member (48) comprises a rigid plate having one face engaging said pistons (24, 26) and having another face engaging said pivot axis (50).

3. A brake regulator according to Claim 2, characterized in that said balance member (48) is connected to said casing (12) by a holding spring (66) being of small stiffness in the common direction of said pistons (24, 26) and of great stiffness in the perpendicular directions.

4. A brake force regulator according to one of Claims 2 or 3, characterized in that it comprises a support plate (60) which is engaged by said pivot axis (50) opposite to said balance member (48).

## Patentansprüche

1. Bremskraftregler mit einem Gehäuse (12), das mit zwei parallelen Bohrungen (14, 16) versehen ist, zwei Kolben (24, 26), die in den Bohrungen gleitbar gelagert sind, wobei einer der Kolben (24) in dem Gehäuse eine mit einer Druckquelle zu verbindende Einlasskammer (18, 20) begrenzt und der andere Kolben (26) mit einem Ventil (36, 38) zusammenwirkt, das die Strömung zwischen der Einlasskammer (20) und einer Auslasskammer (22) zur Verbindung mit mindestens einem Bremsmotor steuert, wobei die beiden Kolben (24, 26) aus dem Gehäuse (12) vorstehen und mit den beiden Enden einer Wippe (48) zusammenwirken, die am Gehäuse (12) schwenkbar gelagert ist, wobei die Schwenkachse (50) in Abhängigkeit von · der Fahrzeugbeladung beweglich ist, dadurch gekennzeichnet, dass die Schwenkachse (50) senkrecht auf einem Schwenkzapfen (52) gelagert ist, der sich parallel zu den beiden Kolben (24, 26) erstreckt, wobei der Schwenkzapfen (52) in Abhängigkeit von der Fahrzeugbeladung mit begrenztem Winkelausschlag drehbar ist.

2. Bremskraftregler nach Anspruch 1, dadurch gekennzeichnet, dass die Wippe (48) aus einer starren Platte besteht, deren eine Seite an den beiden Kolben (24, 26) angreift und deren andere Seite an der Schwenkachse (50) angreift.

3. Bremskraftregler nach Anspruch 2, dadurch gekennzeichnet, dass die Wippe (48) mit dem Gehäuse (12) durch eine Haltefeder (66) verbunden ist, die in der gemeinsamen Richtung der Kolben (24, 26) eine geringe Steifigkeit und in den dazu senkrechten Richtungen eine grosse Steifigkeit besitzt.

4. Bremskraftregler nach einem der Ansprüche 2 oder 3, gekennzeichnet durch eine Stützplatte (60), an der die Schwenkachse (50) gegenüber der Wippe (48) angreift.

## FIG_1

FIG. 2

FIG. 3